Europäisches Patentamt

European Patent Office

Office européen des brevets

(11) Publication number: **0 101 761**
**B1**

# EUROPEAN PATENT SPECIFICATION

(45) Date of publication of patent specification: 28.03.90

(51) Int. Cl.⁵: **F 23 D 14/02, C 25 B 1/04**

(21) Application number: 82111597.9

(22) Date of filing: 14.12.82

(54) An apparatus for generating gases from water and for contolled burning of said gases.

(30) Priority: 25.08.82 US 411977

(43) Date of publication of application:
07.03.84 Bulletin 84/10

(45) Publication of the grant of the patent:
28.03.90 Bulletin 90/13

(84) Designated Contracting States:
AT BE CH DE FR GB IT LI LU NL SE

(56) References cited:
EP-A-0 086 439
DE-A-2 641 228
FR-A- 721 354
FR-A-1 178 241
FR-A-2 096 416
GB-A-1 549 738
US-A-3 648 668
US-A-3 977 365
US-A-3 982 878
US-A-4 111 160

(73) Proprietor: Meyer, Stanley A.
3792 Broadway
Grove City Ohio 43123 (US)

(72) Inventor: Meyer, Stanley A.
3792 Broadway
Grove City Ohio 43123 (US)

(74) Representative: Wasmeier, Alfons, Dipl.-Ing.
et al
Postfach 382 Greflingerstrasse 7
D-8400 Regensburg (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention refers to an apparatus according to the introductory part of claim 1.

The electrolysis process for generating hydrogen and oxygen gas is well known in the art. With a proper mixture of oxygen gas the hydrogen gas is combustible and under ideal conditions a flame may be obtained. However, because the burning velocity of hydrogen is 265—325 cm/sec versus 37—45 cm/sec of that of gasoline, the velocity of hydrogen is so high that the hydrogen ensuing from a nozzle will not under ordinary circumstances sustain a flame.

Therefore, to sustain a flame at a nozzle attached to a hydrogen generator the burning velocity of the hydrogen gas must be reduced.

It has been found that all water in its natural state, whether it be tap water, well water, sea water, or fresh water is a saturate of ambient air. As ambient air contains a substantial amount of nitrogen, all natural water will have entrapped therein nitrogen. The percentage of nitrogen entrapped in natural water has been determined to be a fixed percentage of very uniform at seventeen (17%) percent irrespective of the source of the water or its impurities. Hence, a natural water gas analysis will show a seventeen percent of nitrogen relative to the hydrogen and oxygen.

From Applicant's EP—A—0 086 439 a hydrogen gas generator system with a mixing chamber is known, in which hydrogen gas, ambient air as a source of oxygen and exhaust gas are mixed. Said mixing chamber is provided with a trap area to which the hydrogen gas and the exhaust gas are supplied and are mixed so that the mixture of hydrogen and exhaust gas is directed downwardly and the ambient air inlet flow is directed opposite to the outlet flow of the mixed gases. This system uses entirely different apparatus as a hydrogen generator and a mixing chamber, and the gas generator itself does not teach any nozzle with an outlet port for providing a flame nor any adjustable valve means for controlling the amount of non-combustible gases.

A hydrogen generator with the features stated in the preamble of the main claim of this application is described by DE—A—26 41 228. This known system shows a water disintegrating device for generating hydrogen and oxygen supplied to the cylinders of an engine, and uses distilled water with 10% sulfuric acid for generating hydrogen and oxygen by electrolysis, however, does not teach an apparatus according to the subject invention.

US—A—41 11 160 describes an apparatus for generating hydrogen by electrolysis and for operating an internal combustion engine with hydrogen, air and hydrocarbon fuel. The hydrogen generator uses tap water instead of distilled water, however, this system otherwise has nothing in common with the apparatus according to this invention.

Moreover, US—A—36 48 668 shows a gas operated internal combustion engine using sea water highly saturated with salt. This is contrary to the teaching of the subject invention, which operates with any type of water. Besides of this difference, the subject matter of this application according to the characterising clause of the new main claim cannot be derived from this document.

US—A—39 82 878 and 39 77 365 both describe the possibility of adding a diluent for controlling the burning of fuel oxygen mixture; such diluent gas can be carbon dioxide or argon, however, from these two documents an apparatus according to the subject invention cannot be derived by the average expert.

The object of the present invention is to provide a hydrogen/oxygen generator, which in addition to the hydrogen and oxygen gases releases non-combustible nitrogen gas capable of reducing the burning velocity and temperature of a pure hydrogen/oxygen flame, and includes the controlled addition of other non-combustible gases to the gas chamber thereof to thereby further control the burning velocity and temperature of the hydrogen gas and to adjust the burn-rate of the hydrogen/air gas-mixture to co-equal the burn rate of fossil fuels to obtain, sustain and maintain an open-air hydrogen/oxygen flame without the aid of a second re-heat energy source.

In accordance with the present invention an apparatus according to the introductory part of claim 1 is provided with the features of the characterising part of claim 1. The natural water hydrogen generator is a multi-gas generator releasing hydrogen, oxygen and ambient air gases in a uniform gas mixture by way of voltage stimulation, the non-combustible gases (which means gases that do not support the gas combustion process) derived from the ambient air gases entrapped in the natural water intermix with the hydrogen/oxygen gases forming a uniform gas mixture.

The nozzle connected to the collection chamber via an appropriate line has a port opening of a controlled size and configuration related to the size of the flame and the temperature and velocity of the burning gas mixture. To maintain the flame, that is to prevent blowout, additional nozzles are included when the overall flame size is to be increased.

The invention is illustrated by way of example in the accompanying drawings, wherein:

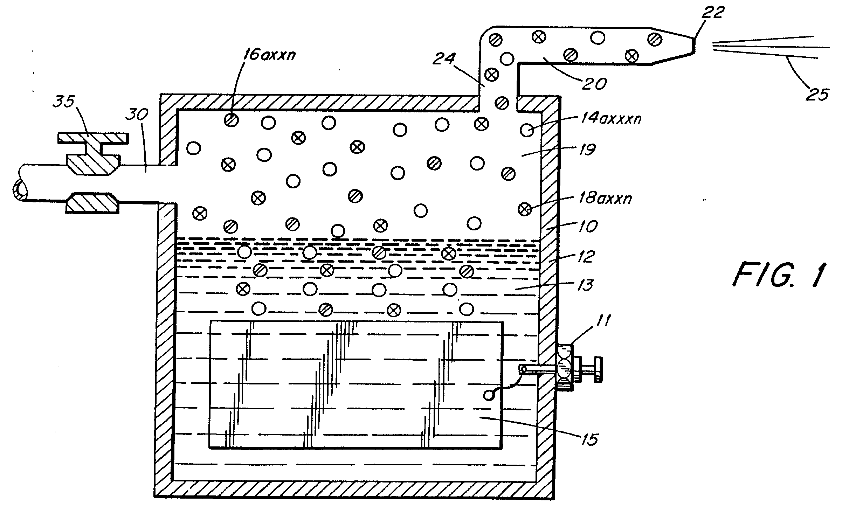

Figure 1 is a cross-section view of a hydrogen generator illustrating the features of the present invention in its most preferred embodiment incorporated therein, and

Figure 2 is a front face view of a nozzle having an increased number of nozzle ports to increase the flame size.

The hydrogen generator 10 comprises a closed water-tight housing 12 having therein natural water 13. Submerged in the water 13 is a pair of plates 15 having a direct current low amperage voltage, via connector 11, applied thereto.

Unlike the electrolysis process for generating hydrogen from distilled water, the hydrogen generator utilizes water 13 that needs not be pure—simply any water irrespective of contaminents and source.

Natural water such as tap, well, sea or fresh water is an absorber of ambient air. Ambient air in turn contains a substantial amount of nitrogen gas. Water as an absorber of ambient air will entrap seventeen percent (17%) of nitrogen gas; that is natural water absorbs seventeen percent (17%) of nitrogen gas in comparison to its hydrogen and oxygen gas content. In operation of the hydrogen generator the gases in the water will be released. Therefore, when natural water is used the air will be released together with the hydrogen and oxygen gases.

In the preferred embodiment utilizing tap water, the nitrogen gases 16a—16n are intermixed with the hydrogen gases 14a—14n and the oxygen gases 18a—18n in the chamber 19 of the hydrogen generator 10.

Upon release of the gases via line 24 and nozzle 20 and then port 22 the gas mixture is ignited to provide a flame 25. Flame 25 is sustained in that the nitrogen gases 16a—16n reduce the burning velocity and temperature of the hydrogen gas 14a—14n.

A realistic and practical manner of further controlling the burning velocity and temperature of the hydrogen gases 14a—14n is by adding non-combustible gases directly to the hydrogen and oxygen gases generated. This is accomplished by inlet 30 to the upper gas chamber 19 of the hydrogen generator. Valve means 35 is adjustable to control the amount of non-combustible gases 16a—16n added to the gas chamber 19.

The nozzle 20 connected to the chamber 19 of the generator 10 via line 17 is of a given configuration to permit a predetermined quantity of gases to be expelled from the port 22. The port size is dependent on the gases generated and collected in the chamber 19, the pressure of the chamber 19 of the generator 10, and the size of the flame desired.

Increasing the size of the flame 25 would appear to be a simple matter of increasing the rate of gases generated. However, an increase of gases merely causes a blowout at the port 22 opening of the nozzle 20. This flame blowout will occur since an increase in hydrogen gas generation disrupts the ratio of the initial mixture even though the percentages remain constant. Typically, tap water will contain 62% hydrogen, 31% oxygen, and 17% nitrogen. In actuality the percentages may be somewhat less dependent on the other gases that may be tapped in the tap water. The increase in production will not affect the percentages but it must be appreciated that the volume of the gases will be proportionately increased. In turn, the volume being directly related to pressure, the pressure will be similarly increased.

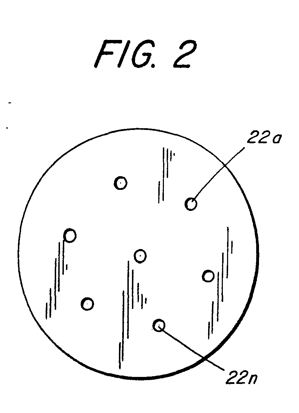

To effectively reduce or counter the velocity due to the increased pressure of the hydrogen gas mixture in the chamber 19, a larger port 22 would appear to be capable of handling the increased pressure. But, as aforesaid, a larger port and the concentration of the high velocity hydrogen gas mixture will cause a flame blowout. To sustain a larger flame with increased pressure, additional nozzles 20a—20n having ports 22a—22n or a nozzle 20 with multiple ports 22a—22n shown in Figure 2, of predetermined port size, will be added to line 24. Accordingly, the larger the desired flame the greater the number of ports.

It can be understood that a port that will not sustain a flame does present a safety factor relative to hydrogen spark back to the chamber 19. Hence, the size of the port 22 has the effect as a quencher of hydrogen spark back.

## Claims

1. An apparatus for generating gases from water and for controlled burning of said gases, comprising a water-tight housing (12) with a chamber containing water (13) in its lower part, a pair of similar non-oxidizing electrodes (15) in said lower part of said chamber having direct current of low amperage voltage applied thereto, a gas collection room (19) in the upper part of said chamber for collecting said generated gases, a nozzle (20) connected to the top of said collection room (19) of said chamber, said nozzle including an inlet for receiving said released gases and having an outlet port of a predetermined size and configuration, characterized in that the water in said chamber is natural water including entrapped air, in that the generated hydrogen and oxygen gases and the released air out of said air containing water are collected in said collection room (19) in the upper part of said chamber, in that an inlet (30) supplying non-combustible gases to said collection room (19) is provided at the upper part of said chamber, said inlet being connected to a supply line with an adjustable valve (35) controlling the amount of non-combustible gases supplied to said collection room (19) of said chamber, and in that said outlet port (22) is related to the ratio of gases in the collection chamber to provide a flame of a predetermined velocity and size at said port.

2. An apparatus according to claim 1, wherein said port size and configuration is maintained with a plurality of ports to thereby permit a proportional increase in flame size.

## Patentansprüche

1. Vorrichtung zur Erzeugung von Gasen aus Wasser und zur kontrollierten Verbrennung dieser Gase, die ein wasserdichtes Gehäuse (12) mit einer Wasser (13) im untersten Teil enthaltenden Kammer, einem Paar von ähnlichen, nicht oxidierenden Elektroden (15) im untersten Teil der Kammer, denen Gleichstrom geringer Stromstärke und Spannung zugeführt wird, und einem Gassammelraum (19) im oberen Teil der Kammer zum Sammeln der erzeugten Gase, einer Düse (20), die mit der Oberseite des Sammelraumes (19) der Kammer verbunden ist, wobei die Düse einen Einlaß zum Aufnehmen der freigegebenen Gase und eine Auslaßöffnung vorbestimmter Größe und Konfiguration besitzt, dadurch gekennzeichnet, daß das Wasser in der Kammer natürliches Wasser mit eingeschlossener Luft ist, daß die erzeugten Wasserstoff- und Sauerstoffgase und die freigegebene Luft aus dem Luft enthaltenden Wasser in dem Sammelraum (19) im oberen Teil der Kammer gesammelt werden, daß ein Einlaß (30) zum Einspeisen von nicht brennbaren Gasen in den Sammelraum (19) am unteren Teil der Kammer vorgesehen ist, wobei dieser Einlaß an eine Speiseleitung mit einem einstellbaren Ventil (35) angeschlossen ist, das die Menge an nicht brennbaren Gasen, die dem Sammelraum (19) der Kammer zugeführt werden, steuert, und daß die Auslaßöffnung (20) auf das Verhältnis von Gasen in der Sammelkammer bezogen ist, um eine Flamme mit vorbestimmter Geschwindigkeit und Größe an dieser Öffnung zu erzeugen.

2. Einrichtung nach Anspruch 1, dadurch gekennzeichnet, daß die Größe und Konfiguration der Öffnung bei einer Vielzahl von Öffnungen aufrecht erhalten wird, um damit eine proportionale Zunahme der Flammengröße zu erreichen.

**Revendications**

1. Appareil pour la production de gaz à partir de l'eau et pour la combustion contrôlée de ces gaz comprenant un logement étanche à l'eau (12) avec une chambre contenant de l'eau (13) dans sa partie inférieure, une paire d'électrodes non oxydantes, similaires (15) dans la partie inférieure précitée de la chambre précitée auxquelles est appliquée une tension continue produisant un courant de faible intensité, un compartiment (19) de récupération de gaz dans la partie supérieure de la chambre précitée pour recueillir les gaz produits précités, une buse (20) reliée au dessus du compartiment de récupération (19) précité de la chambre précitée, la buse précitée comprenant une entrée pour la réception des gaz libérés précités et ayant un orifice de sortie de dimensions et de configuration prédéterminées, caractérisé en ce que l'eau dans la chambre précitée est de l'eau naturelle comprenant de l'air emprisonné, l'hydrogène et l'oxygène gazeux produits et l'air libéré à partir de l'eau précitée contenant de l'air sont recueillis dans le compartiment de récupération (19) précité dans la partie supérieure de la chambre précitée, une entrée (30) amenant des gaz non combustibles dans le compartiment de récupération (19) précité est prévue à la partie supérieure de la chambre précitée, cette entrée étant reliée à un conduit d'alimentation avec une soupape réglable (35) commandant la quantité de gaz non combustibles amenés dans le compartiment de récupération (19) précité de la chambre précitée, et l'orifice de sortie (22) précité est en relation avec le rapport de gaz dans la chambre de récupération afin d'obtenir une flamme de vitesse de combustion et de dimensions prédéterminées à l'orifice précité.

2. Appareil selon la revendication 1 caractérisé en ce que les dimensions et la configuration de l'orifice précité sont maintenues avec une pluralité d'orifices de manière à permettre ainsi une augmentation proportionnelle des dimensions de flamme.

FIG. 1

# FIG. 2

22a

22n